Europäisches Patentamt

(19) European Patent Office

Office européen des brevets

(11) Publication number: **0 254 581**
**B1**

# (12) EUROPEAN PATENT SPECIFICATION

(45) Date of publication of the patent specification:
09.05.90

(21) Application number: 87306542.9

(22) Date of filing: 23.07.87

(51) Int. Cl.⁵: **F16C 1/22,** F16D 13/75

(54) Mechanical cable control adjustment device and method for the initial adjustment thereof.

(30) Priority: 23.07.86 FR 8610695

(43) Date of publication of application:
27.01.88 Bulletin 88/4

(45) Publication of the grant of the patent:
09.05.90 Bulletin 90/19

(84) Designated Contracting States:
DE ES FR GB IT

(56) References cited:
EP-A- 0 120 616
FR-A- 865 681

(73) Proprietor: **Acco Cable Controls Limited, Baldwin Road,
Stourport-on-Severn DY13 9BB Worcestershire(GB)**

(72) Inventor: **Guidecelli, Charles, 5, rue Bon Vouloir St. Jean
du Bois, F-72430 Noyen(FR)**

(74) Representative: **Lewis, David Overington, Babcock
International plc 217 Tabard Street, London
SE1 4UR(GB)**

ACTORUM AG

## Description

This invention relates to a mechanical cable control device arranged to connect a member to be actuated with an actuating member, such as a motor vehicle clutch and a clutch pedal in which a length of cable core is axially movable in a cable conduit having first and second consecutive conduit sections the adjacent ends of which are provided respectively with co-axial first and second connector structures axially movable the one within the other, a spacer spring acting between the first and second connector structures, and manually actuated locking means for fixing the first and second connector structures the one relative to the other.

A device of this type is described in the not prepublished EP-A 224 399. With such a device, by connecting to the actuating member and to the member to be actuated the ends of the cable which project on either side of the opposite ends of the conduit sections anchored in corresponding fixed supports, the device is set to the appropriate length automatically in situ under the effect of a spacer spring, after which the locking means are used to fix the connector structures to one another in the relative position thus obtained, without the need for adjustment work at the connection between the ends of the cable and the actuating member or member to be actuated.

However, where clutches for motor vehicles are concerned, these are subjected to progressive wear which appreciably alters the geometry of the kinematic chain between the actuating meber and the member to be actuated. In particular, when the clutch lining is new, the clutch fork can execute an angular movement greater than that available at the outset at the time of the initial adjustment of the mechanical control. This is not true of the clutch pedal which has a range of movement determined once and for all by its lower stop, when the pedal is completely pressed down, and by its upper stop, towards which the pedal returns in the rest position. Consequently, in proportion as the clutch linings become worn, the cable, tensioned in the configuration required at the time of the initial adjustment, cannot adjust progressively, in relation to the movement of the clutch fork, accompanying the clutch lining wear because of the above-mentioned upper stop, so that when the actuating pedal is released the clutch no longer re-engages correctly, thereby leading to a substantial reduction in the useful life of the clutch.

It is an object of the present invention to provide a cable-type mechanical control device with initial manual adjustment means but which overcomes such a disadvantage, without increasing the production costs of the device, at the same time ensuring that the facility of initial adjustment to the latter continue to be simple and accurate.

To achieve this, according to one feature of the invention, the mechanical control device includes a retractable connecting means which comprises a termination member associated with one of the elements of the pair consisting of the second connector structure and of the adjacent end of the second conduit section, said member having first and second stop means located at an axial distance from one another and designed to interact successively by engagement with the other element of the said pair, the first stop means being movable from a blocking position under the effect of a relative compressive force between the two elements of the said pair, in order to allow the second stop means to interact with the other element of the said pair.

Another object of the present invention is to provide a method for the initial adjustment of such a cable-type mechanical control, which is simple and effective to use and which makes it possible to ensure that the equipment associated with the member to be actuated functions correctly, even in the event of a change in the geometrical operating parameters of the member to be actuated.

To achieve this, according to a feature of the invention, this method of initial adjustment, involving the prior steps of connecting the cable to the actuating member and to the member to be actuated, automatically setting the mechanical control device to the appropriate length under the effect of the spacer spring and then using the locking means to fix the connector structures firmly to one another in the position thus obtained, is characterized in that it comprises the subsequent step of actuating the actuating member in order to actuate the member to be actuated, thereby tensioning the cable so as to bring the connecting means into its retracted configuration as a result of reaction in the conduit.

By means of such an arrangement and such a method of adjustment, the presetting of the mechanical control device to an appropriate length actually corresponds to temporary initial preadjustment, and the subsequent step of actuating the actuating member, causing the retraction of the connecting means and therefore a shortening of the conduit in relation to the preadjustment position, results in the provision of a slight excess length of cable, thus allowing the actuating member to move a specific distance away from its upper stop, whilst nevertheless keeping the cable correctly tensioned, so that, in proportion as the clutch becomes worn, the cable may accompany the corresponding movement of the clutch fork, before finally coming up against its upper stop, thereby enabling an appropriate re-engagement of the clutch even when the wear of the clutch lining is considerable.

The invention will now be described by way of example with reference to the accompanying, partly diagrammatic, drawings in which:-

Figure 1 is a view in longitudinal section of a mechanical cable control adjuster device in which the lower half shows the device in a configuration of initial preadjustment with manually actuable locking means in an engaged position and the upper half shows the device in a configuration of final initial adjustment but with the manually actuable locking means in a dis-engaged position; and

Figure 2 is a cross-sectional view in the sectional plane II-II through the two parts of Figure 1.

As shown the cable control device includes an actuating cable core 1 axially movable within two axially distinct consecutive flexible conduit portions 2, 3, with the portion 2 having an end portion 4 bared to expose indented convolutions of a wound wire casing of the conduit slidably extending into a cylindrical connector 5. The cable core 1 is connected at one end to a vehicle clutch fork provided with a tension spring 7 and at the other end to a clutch pedal 8 provided with a tension spring 9 urging the pedal towards an upper stop 10. The ends of the conduit sections 2 and 3 remote from the connector 5 are anchored respectively in relative stationary structures on the vehicle (not shown).

Initial adjustment means for the device include a spacer spring 11 urging the connector 5 axially away from the conduit portion 2 and manually actuable locking means comprising detents 12 each having on a radially inner face teeth corresponding in pitch to the indented convolutions of the conduit casing and being guided slidably in a radial slot 13 in the connector 5. The radially outer end 14 of each detent 12 has the form of a section of a frustum of a cone arranged to co-act with a cam surface of corresponding profile of an operating member 15 formed as two, snap together, parts mounted rotatably and slidably on the connector 5. The spacer spring 11 acts between an end face of the operating member 15 and a collar 17 crimped on to the conduit portion 2 and a flexible boot 18 is provided between the ring 17 and the operating member 15 to prevent the ingress of deleterious matter into the device. An O-ring seal is provided between connector 5 and the operating member 15 to a similar purpose.

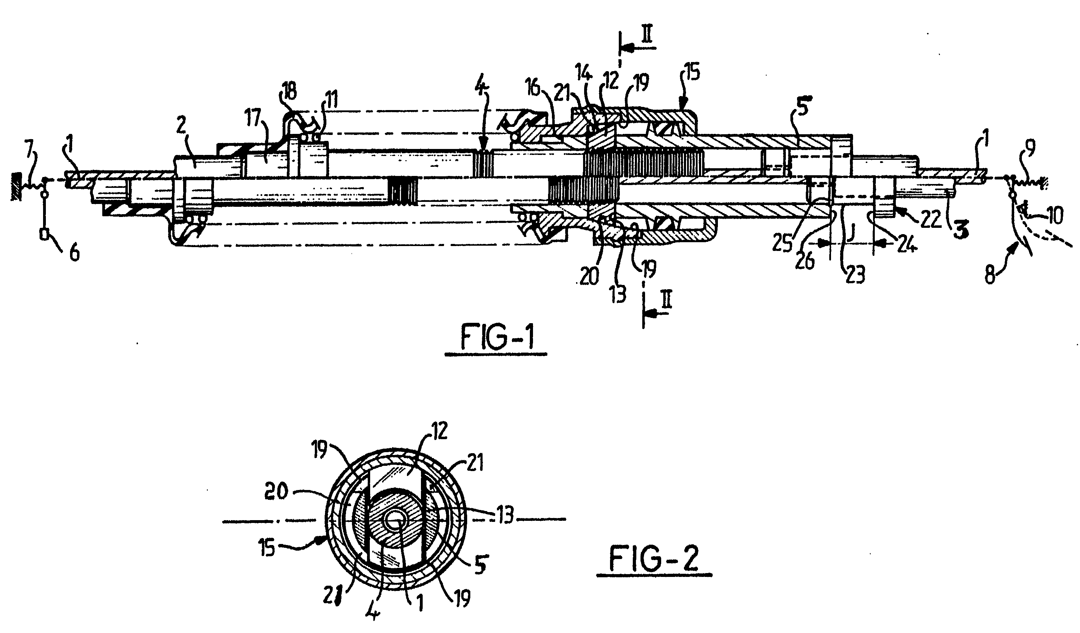

The operating member 15 is formed internally with a frusto-conical cam surface 19 having diametrically opposed axial extensions 20 corresponding in width to the detents 12, the remainder of the cam surface 19 abutting radial shoulders 21 formed on the interior of the operating member 15. In a dis-engaged position, shown in the upper half of Figure 1, the detents 12 are seated respectively on the radial shoulders 21. Upon manually rotating the operating member 15 to bring the detents 12 into register with the axial extensions 20, as shown in the lower half of Figure 1, the spring 11 urges the operating member 15 axially away from the conduit portion 2 to seat upon a radial shoulder 16 formed upon the connector 5 whilst, at the same time, causing the detents 12 to move radially inwardly by the inter-action of the axial extensions 20 of the frusto-conical cam surface 19 and the outer ends 14 of the detents 12, thereby affecting full and rigid engagement of the teeth with the indented convolutions of the wire wound conduit.

The conduit portion 3 is provided with a termination 22 having a cylindrical end portion 23 of an outside diameter corresponding to the inside diameter of the connector 5 and is formed with an annular bead 25 and an end collar 24. In an initial assembled configuration of the control cable device, the end portion 23 of the termination 22 extends only partially into the connector 5, the bead 25 seating on an end face 26 of the connector 5.

On installation, the cable control device is appropriately positioned within the bodywork of the vehicle, the respective ends of the cable core 1 connected to the clutch fork 6 and the pedal 8 and the outer ends of the conduit portions 3,5 anchored to the bodywork. To effect initial adjustment, the operating member 15 is then moved manually to compress the spring 11 such that the detents 12 register with the radial shoulders 21 and is rotated so as to put the detents 12 into the dis-engaged position, the spacer spring 11 then ensuring that the device is set to the appropriate length under the effect of the force transmitted to the connector 5 by the effect of the spring 11 acting between the collar 17 on the conduit portion 2 and the operating member 15, the detents 12, the connector 5 and the termination 22 on the conduit portion 3 fully to extend the device such that with the clutch fork in the engaged position, the cable core 1 is tensioned to move the pedal against the upper stop 10, the spring 7 being considerably stronger than the spring 9.

The operating member 15 is then rotated to bring the diametrically opposed extensions 20 of the frusto-conical surface 19 into register with the detents 12, whereupon the action of the spacer spring 11 urges the operating member 15 toward the conduit portion 3. The outer ends 14 of the detents 12 then co-act with the extensions 20 of the frusto-conical surface 19 to urge the detents radially inwardly such that the teeth formed on the inner faces engage with the indented convolutions of the conduit portion 2 and thereby form a rigid connection between the conduit portion 2 and the connector 5.

Following initial adjustment, the pedal 8 is then pushed down to the full extent to move the clutch fork to a dis-engaged position. The resulting tension in the cable core 1 generates, between the two conduit portions 2 and 3, a substantial compressive force urging the termination 22 into the connector 5 sufficient to overcome the initial stop on the bead 25 and the shoulder 26, this penetration taking place over a distance J, until the radial shoulder 24 bears firmly against the radial shoulder 26, this configuration subsequently being maintained, as a result of the frictional force fit between the bead 25 and the connector 5. The reduction by the distance J in the length of the cable conduit restores a corresponding length to the cable core 1 which is taken up by the tensioning spring 9, to bring pedal 8 to a rest position spaced by a small amount (not detectable by the user) from the upper stop 10, in order, as mentioned above, to accommodate the change in the relative axial position of the cable core 1 accompanying compensation for wear of the clutch lining.

**Claims**

1. Mechanical cable control adjustment device comprising a cable (1) intended to be connected to an actuating member (8) and to a member to be actuated (6) and sliding in a cable conduit consisting of a first and a second consecutive conduit section (2, 3), the adjacent ends of which are connected to and extended by respectively, a first and a second connector structure (4, 5) associated telescopically with one another, a spacer spring (11) between the first and second connector structures, and manually actuated locking means (12) for fixing the first and second connector structures to one another, characterized in that a retractable connecting means comprises a termination member (22) associated with one (3) of the elements of the pair consisting of the second connector structure (5) and of the adjacent end of the second conduit section (3), said member having first and second stop means (25, 24) located at an axial distance from one another and designed to interact successively by engagement with the other element (5) of the said pair, the first stop means (25) being movable from a blocking position under the effect of a relative compressive force between the two elements of the said pair, in order to allow the second stop means (24) to interact with the other element (5) of the said pair.

2. Device as claimed in claim 1, characterized in that the termination member (22) is received telescopically in one end of the second connector structure (5), the first and second stop means consisting of first and second stop surfaces (25, 24) projecting radially and capable of interacting with a complementary stop surface (26) of the second connector structure (5).

3. Device as claimed in claim 2, characterized in that the termination member (22) comprises a cylindrical end portion (23) of a diameter corresponding to the internal diameter of the second connector structure (5) and ending in a radial shoulder (24) forming the second stop surface, the cylindrical end portion (23) having, in an intermediate zone, a bead (25) forming the first stop surface and capable of being urged into the second connector (5), the complementary stop surface (26) being formed by an annular surface at the end of the second connector (5).

4. Device as claimed in any preceding claim, characterized in that locking means (12) are carried by the second connector structure (5) and are arranged to interact by engagement with the first connector structure (4) extending within the second connector (5).

5. Device as claimed in claim 4, characterized in that the locking means consist of at least one locking element (12) radially movable in the second connector structure (5) and actuable by means of a cam (20) formed on an operating member (15) carried by the second connector structure.

6. Device as claimed in claim 5, characterized in that a spacer spring (11) bears on the operating member (15).

7. Device as claimed in claim 6, characterized in that the cam (20) is formed on an inner angular sector portion of the operating member (15).

8. Device as claimed in any preceding claim, characterized in that the first connector structure (5) is formed by a bared end of the second conduit section (3).

9. Method of effecting initial adjustment of a mechanical cable control according to any preceding claim, including the steps of connecting the cable (1) to an actuating member (8) and to a member to be actuated (6), setting the device to the appropriate length under the effect of a spacer spring (11) and then using locking means (12) to fix the first and the second connector structures (4, 5) firmly to one another in the relative position thus obtained, characterized in that it comprises the subsequent step of actuating the actuating member (8) in order to actuate the member to be actuated (6) so as to bring the retractable connecting means (22, 26) into the position in which the second stop means (24) interacts with the other element (5) of the pair consisting of the second connector structure (5) and of the adjacent end of the second conduit section (3), as a result of the reaction in the conduit (2, 3).

**Revendications**

1. Dispositif de réglage d'une commande mécanique à câble comprenant un câble (1) destiné à être relié à un organe d'actionnement (8) et à un organe à actionner (6) et coulissant dans un conduit de câble constitué d'un premier et d'un second tronçon de conduit consécutifs (2, 3), dont les extrémités adjacentes sont reliées respectivement, à une première et seconde structure d'embout (4, 5) et prolongées par ces dernières associées télescopiquement l'une à l'autre, un ressort écarteur (11) entre la première et seconde structure d'embout, et des moyens de verrouillage (12) à actionnement manuel pour solidariser l'une à l'autre la première et seconde structure d'embout, caractérisé en ce qu'un moyen de liaison rétractable comprend un organe d'entretoisement (22) associé à l'un (3) des éléments de la paire constituée de la seconde structure d'embout (5) et de l'extrémité adjacente du second tronçon de conduit (3), ledit organe comportant un premier et second moyen d'arrêt (25, 24) axialement espacés l'un de l'autre et adaptés pour coopérer successivement par engagement avec l'autre élément (5) de ladite paire, le premier moyen d'arrêt (25) étant déplaçable à partir d'une position de blocage sous l'effet d'une force relative de compression entre les deux éléments de ladite paire, pour amener le second moyen d'arrêt (24) à coopérer avec l'autre élément (5) de ladite paire.

2. Dispositif selon la revendication 1, caractérisé en ce que l'organe d'entretoisement (22) est reçu de façon télescopique dans une extrémité de la seconde structure d'embout (5), le premier et second moyen d'arrêt étant constitué d'une première et seconde surface de butée (25, 24) faisant saillie radialement et susceptibles de coopérer avec une surface de butée complémentaire (26) de la seconde structure d'embout (5).

3. Dispositif selon la revendication 2, caractérisé en ce que l'organe d'entretoisement (22) comprend une partie d'extrémité cylindrique (23) d'un diamètre correspondant au diamètre interne de la seconde structure d'embout (5) et se terminant dans un épaulement radial (24) formant la seconde surface de butée, la partie d'extrémité cylindrique (23) comportant, en une zone intermédiaire, un bourrelet (25) formant la première surface de butée et susceptible de pénétrer à force dans le second embout (5), la surface de butée complémentaire (26) étant formée par une surface annulaire à l'extrémité du second embout (5).

4. Dispositif selon l'une quelconque des revendications précédentes, caractérisé en ce que les moyens de verrouillage (12) sont portés par la seconde structure d'embout (5) et sont adaptés pour coopérer par engagement avec la première structure d'embout (4) s'étendant à l'intérieur du second embout (5).

5. Dispositif selon la revendication 4, caractérisé en ce que les moyens de verrouillage sont constitués d'au moins un élément de verrouillage (12) déplaçable radialement dans la seconde structure d'embout (5) et actionnable au moyen d'une came (20) formée sur un organe de manœuvre (15) porté par la seconde structure d'embout.

6. Dispositif selon la revendication 5, caractérisé en ce qu'un ressort écarteur (11) prend appui sur l'organe de manœuvre (15).

7. Dispositif selon la revendication 6, caractérisé en ce que la came (20) est formée sur une portion de secteur angulaire intérieure de l'organe de manœuvre (15).

8. Dispositif selon l'une quelconque des revendications précédentes, caractérisé en ce que la première structure d'embout (4) est formée par une extrémité dénudée du premier tronçon de conduit (2).

9. Procédé de réglage initial d'une commande mécanique à câble selon l'une quelconque des revendications précédentes, comprenant les étapes consistant à relier le câble (1) à un organe d'actionnement (8) et à un organe à actionner (6), mettre le dispositif à la longueur appropriée sous l'effet d'un ressort écarteur (11) puis à mettre en œuvre les moyens de verrouillage (12) pour solidariser fermement la première et la seconde structure d'embout (4, 5) l'une à l'autre dans la position relative ainsi obtenue, caractérisé en ce qu'il comprend l'étape ultérieure consistant à actionner l'organe d'actionnement (8) pour actionner l'organe à actionner (6) afin d'amener le moyen de liaison rétractable (22, 26) dans la position où le second moyen d'arrêt (24) coopère avec l'autre élément (5) de la paire constituée de la seconde structure d'embout (5) et de l'extrémité adjacente du second tronçon de conduit (3), par réaction dans le conduit (2, 3).

**Patentansprüche**

1. Mechanische Seilzug-Einstellvorrichtung mit einem Kabel (1), das zur Verbindung mit einem Betätigungsglied (8) und mit einem zu betätigenden Glied (6) vorgesehen ist und in einer Kabelführungshülle gleitet, die aus einem ersten und einem zweiten darauffolgenden Führungsabschnitt (2, 3) besteht, deren angrenzende Enden mit einer ersten und einer zweiten Verbinderstruktur (4, 5), die teleskopisch einander zugeordnet sind, miteinander verbunden werden bzw. durch diese verlängert werden, mit einer Abstandsfeder (11) zwischen der ersten und zweiten Verbinderstruktur, und mit von Hand betätigten Riegeleinrichtungen (12) zur Festlegung der ersten und der zweiten Verbinderstruktur zueinander, dadurch gekennzeichnet, daß eine rückziehbare Verbindungseinrichtung ein Abschlußglied (22) aufweist, welches einem (3) der Elemente des Paares zugeordnet ist, das aus der zweiten Verbindungsstruktur (5) und dem angrenzenden Ende des zweiten Führungsabschnittes (3) besteht, daß das Glied eine erste und eine zweite Anschlageinrichtung (25, 24) aufweist, die in einem axialen Abstand voneinander angeordnet sind und zur aufeinanderfolgenden Einwirkung durch Eingriff mit dem anderen Element (5) des Paares ausgelegt sind, und daß die erste Anschlagseinrichtung (25) von einer Blockierstellung unter der Wirkung einer relativen Kompressionskraft zwischen den beiden Elementen des Paares bewegbar ist, um eine Wechseleinwirkung der zweiten Anschlagseinrichtung (24) mit dem anderen Element (5) des Paares zu ermöglichen.

2. Vorrichtung nach Anspruch 1, dadurch gekennzeichnet, daß das Abschlußglied (22) teleskopartig in einem Ende der zweiten Verbinderstruktur (5) aufgenommen wird, daß die erste und zweite Anschlagseinrichtung aus einer ersten und einer zweiten Anschlagsfläche (25, 24) besteht, die radial vorstehen und in der Lage sind, mit einer komplementären Anschlagsfläche (26) der zweiten Verbinderstruktur (5) zusammenzuwirken.

3. Vorrichtung nach Anspruch 2, dadurch gekennzeichnet, daß das Abschlußglied (22) ein zylindrisches Endteil (23) mit einem Durchmesser entsprechend dem Durchmesser der zweiten Verbindungsstruktur aufweist und in einer radialen Schulter (24) endet, welche die zweite Anschlagsfläche bildet, daß das zylindrische Endteil (23) in einer Zwischenzone einen Wulst (25) aufweist, der die erste Anschlagsfläche bildet und in den zweiten Verbinder (5) hineingedrängt werden kann, und daß die komplementäre Anschlagsfläche (26) durch eine Ringfläche am Ende des zweiten Verbinders (5) gebildet wird.

4. Vorrichtung nach einem der vorhergehenden Ansprüche, dadurch gekennzeichnet, daß Verriegelungsmittel (12) von der zweiten Verbinderstruktur (5) getragen werden und so angeordnet sind, daß sie durch Eingriff mit der ersten Verbinderstruktur (4) zusammenwirken, die sich innerhalb des zweiten Verbinders (5) erstreckt.

5. Vorrichtung nach Anspruch 4, dadurch gekennzeichnet, daß die Verriegelungsmittel aus mindestens einem Verriegelungselement (12) bestehen, welches in der zweiten Verbinderstruktur (5) radial beweglich und mittels eines Nockens (20) betätigbar ist, der an einem Betätigungsglied (15) angeformt ist, welches durch die zweite Verbinderstruktur getragen wird.

6. Vorrichtung nach Anspruch 5, dadurch gekennzeichnet, daß eine Abstandsfeder (11) auf das Betätigungsglied (15) drückt.

7. Vorrichtung nach Anspruch 6, dadurch gekennzeichnet, daß der Nocken (20) an einem inneren winkelmäßigen Sektorteil des Betätigungsgliedes (15) angeformt ist.

8. Vorrichtung nach einem der vorhergehenden Ansprüche, dadurch gekennzeichnet, daß die erste Verbinderstruktur (5) durch ein freigelegtes Ende des zweiten Führungsabschnittes (3) gebildet wird.

9. Verfahren zur Anfangeinstellung einer mechanischen Seilzugeinstellvorrichtung gemäß einem der vorhergehenden Ansprüche, mit folgenden Schritten: Verbinden des Kabels (1) mit einem Betätigungsglied (8) und mit einem zu betätigenden Glied (6); Einstellen der Vorrichtung auf die geeignete Länge unter der Einwirkung einer Abstandsfeder (11); anschließende Verwendung von Verriegelungsmittel (12), um die erste und zweite Verbinderstruktur (4, 5) in der so erhaltenen relativen Stellung zueinander fest miteinander zu verbinden; gekennzeichnet durch den nachfolgenden Schritt der Betätigung des Betätigungsgliedes (8), um das zu betätigende Glied (6) zu betätigen, um so die zurückziehbare Verbindungseinrichtung (22, 26) in die Stellung zu bringen, in welcher die zweite Anschlagseinrichtung (24) mit dem anderen Element (5) des Paares zusammenwirkt, welches aus der zweiten Verbinderstruktur (5) und dem angrenzenden Ende des zweiten Führungsabschnittes (3) besteht, als ein Ergebnis der Reaktion in der Führungshülle (2, 3).

FIG-1

FIG-2